# FASCICULE DE BREVET EUROPEEN

(11) **EP 1 025 366 B1**
(45) Date de publication et mention de la délivrance du brevet: **25.02.2004**
(21) Numéro de dépôt: 98947645.2
(22) Date de dépôt: 12.10.1998
(51) Int. Cl.: F15C 1/22, G01F 1/32

(54) **OSCILLATEUR FLUIDIQUE A FENTE PROLONGEE**
FLUIDISCHER OSZILLATOR MIT VERLÄNGTEM SPALT
FLUID OSCILLATOR WITH EXTENDED SLOT

(30) Priorité: 17.10.1997 FR 9713145
(43) Date de publication de la demande: 09.08.2000
(73) Titulaire: SCHLUMBERGER INDUSTRIES S.A., 92120 Montrouge (FR)
(72) Inventeur: CARVER, Andrew, John, Seneca, SC 29678 (US); SOREEFAN, Ibné, Seneca, SC 29672 (US)
(74) Mandataire: Feray, Valérie
(86) Numéro de dépôt international: PCT/FR1998/002182
(87) Numéro de publication internationale: WO 1999/020905

(56) Documents cités:
- FR-A- 1 391 215
- FR-A- 2 400 690
- FR-A- 2 746 147
- US-A- 4 244 230

## Description

L'invention est relative à un oscillateur fluidique symétrique par rapport à un plan de symétrie longitudinal P, comprenant, une ouverture permettant au fluide d'entrer dans une chambre dite d'oscillation sous la forme d'un jet de fluide bidimensionnel oscillant transversalement par rapport audit plan de symétrie P, un obstacle occupant la majeure partie de ladite chambre d'oscillation et possédant une paroi frontale pourvue d'une cavité située en vis-à-vis de ladite ouverture et qui est balayée par le jet de fluide en oscillation.

Les oscillateurs fluidiques sont largement connus et le document WO9322627 en donne un exemple qui est représenté en vue de dessus sur la figure 1.

Cet oscillateur 1, symétrique par rapport à un plan de symétrie longitudinal P, comprend une chambre d'oscillation 3 et un obstacle 5 logé à l'intérieur de celle-ci.

L'obstacle 5 possède une paroi frontale 7 dans laquelle une cavité dite frontale 9 est pratiquée en vis-à-vis d'une ouverture 11.

Cette ouverture 11 définit une entrée de fluide dans la chambre d'oscillation 3 et est apte à former un jet de fluide bidimensionnel oscillant transversalement par rapport au plan de symétrie longitudinal P de l'oscillateur.

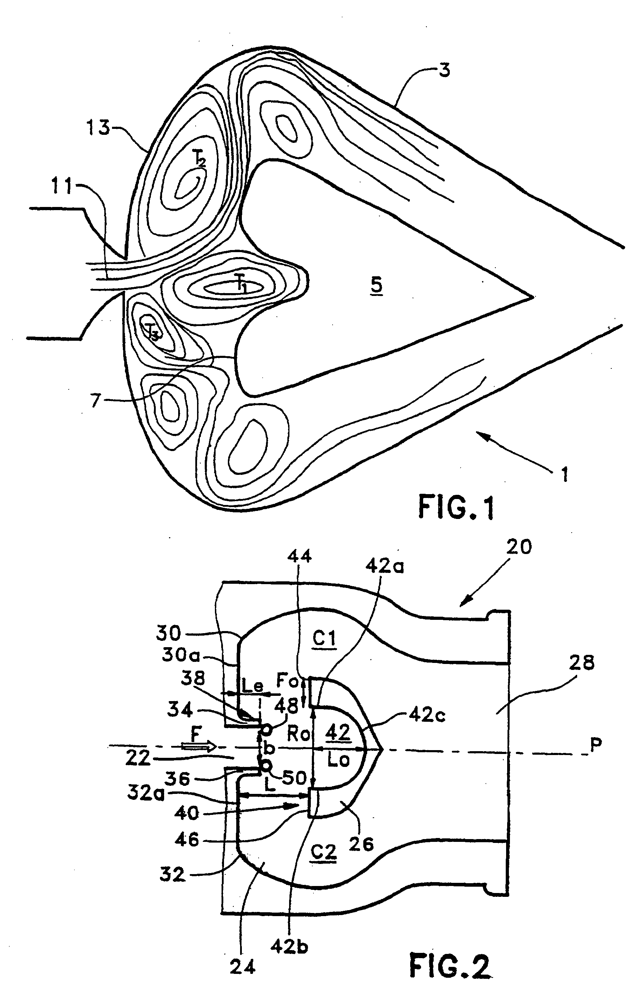

Lors du fonctionnement de l'oscillateur fluidique, lorsque le jet de fluide rencontre la cavité frontale 9 et balaye celle-ci au cours de son oscillation, des tourbillons principaux T1, T2 se forment de part et d'autre du jet (fig.1) et sont alternativement forts et faibles, en opposition de phase et en relation avec l'oscillation du jet.

Sur la figure 1 le tourbillon T1 occupe un espace largement supérieur à celui de la cavité frontale de l'obstacle et la pression de ce tourbillon est telle que le jet est basculé dans une position extrême malgré la présence de l'autre tourbillon T2 localisé entre la paroi frontale 7 de l'obstacle 5 adjacente à la cavité et la paroi 13 en regard de la chambre d'oscillation raccordée à l'ouverture 11.

Lorsque le jet de fluide est dans cette position une partie de l'écoulement issu du jet est dirigé vers l'aval de l'obstacle et une autre partie revient alimenter le tourbillon T2 qui grossit de plus en plus et dont la pression s'accroît jusqu'au moment où la pression est suffisante pour faire basculer le jet de l'autre coté, dans la position extrême opposée.

Le jet oscille ainsi d'une position extrême à l'autre et la détection de la fréquence de l'oscillation du jet permet de déterminer le débit du fluide, la fréquence étant considérée comme proportionnelle au débit.

Pour réduire les erreurs sur la détermination du débit de fluide, le rapport fréquence d'oscillation / débit, ne doit pas trop varier en fonction du régime de l'écoulement.

Or , en régime dit de transition, c'est-à-dire pour des nombres de Reynolds calculés pour l'écoulement situé au droit de l'ouverture 11, situés aux environs de 300, la Demanderesse a pu constater l'apparition d'une zone de haute pression (tourbillon T3) à proximité de la base du jet de fluide du côté où se trouve le tourbillon T1, ainsi que d'autres tourbillons localisés en regard de la paroi frontale sous les tourbillons T1 et T3 sur la figure 1.

Ces tourbillons renforcent l'action du tourbillon T1 et, de ce fait, il faut plus de temps au tourbillon T2 pour qu'il acquiert suffisamment de force afin de contrebalancer les pressions exercées par T1 et T3, ce qui diminue la fréquence d'oscillation et donc introduit des erreurs dans la détermination du débit de fluide.

Par ailleurs, on connaît par le document US 4,244,230 un oscillateur fluidique comportant une buse qui s'étend en direction d'un obstacle en forme de U définissant une chambre d'oscillation. La dimension longitudinale des parois latérales de la buse est égale, voir supérieure à la distance entre les extrémités des parois de l'obstacle et l'apex des surfaces avals de deux éléments de section en forme de demi ovale disposés perpendiculairement par rapport au conduit et dont les axes principaux sont parallèles à la direction d'écoulement du fluide. Lors du fonctionnement de l'oscillateur fluidique, ce type de buse affecte l'oscillation du jet en gênant considérablement le développement du tourbillon T1.

La présente invention vise à remédier à ces problème en proposant un oscillateur fluidique symétrique par rapport à un plan de symétrie longitudinal P, comprenant, une ouverture permettant au fluide d'entrer dans une chambre dite d'oscillation sous la forme d'un jet de fluide bidimensionnel oscillant transversalement par rapport audit plan de symétrie P, un obstacle occupant la majeure partie de ladite chambre d'oscillation et possédant une paroi frontale pourvue d'une cavité située en vis-à-vis de ladite ouverture et qui est balayée par le jet de fluide en oscillation, caractérisé en ce que deux parois latérales s'étendent de part et d'autre de l'ouverture et la prolonge de manière à former une buse à l'intérieur de la chambre d'oscillation, en direction de l'obstacle, suivant une dimension longitudinale strictement inférieure à la distance entre l'ouverture et la paroi frontale de l'obstacle afin que l'extrémité desdites parois ne soient pas trop proche de la cavité.

Cette buse forme un écran de protection pour le jet de fluide contre les tourbillons situés dans la zone de haute pression à proximité de la base dudit jet et qui contribuent à plier celui-ci de manière excessive.

Le jet de fluide est donc moins soumis à l'influence de ces tourbillons perturbateurs que dans l'art antérieur.

Ainsi, l'oscillateur fluidique selon l'invention présente une fréquence d'oscillation augmentée en régime de transition par rapport à celle de l'oscillateur fluidique de l'art antérieur.

Selon une caractéristique, les parois latérales sont sensiblement parallèles entre elles.

Préférentiellement, la dimension longitudinale Le des parois latérales est comprise entre 0,75 et 1b, où b désigne la dimension transversale ou largeur de l'ouverture.

Par exemple, la dimension longitudinale Le des parois latérales est sensiblement égale à b.

Avantageusement, la paroi frontale de l'obstacle comporte deux surfaces frontales essentiellement planes encadrant la cavité dudit obstacle, le plan de chacune desdites surfaces étant sensiblement perpendiculaire au plan de symétrie longitudinal P.

De manière avantageuse, la chambre d'oscillation possède deux portions de parois situées de part et d'autre de l'ouverture et comportant deux surfaces respectivement disposées en regard des surfaces frontales de l'obstacle et étant sensiblement parallèles à celles-ci.

Selon une caractéristique de l'invention, la cavité est définie par une surface qui possède, dans le plan d'oscillation du jet de fluide, d'une part, deux portions droites sensiblement parallèles au plan de symétrie longitudinal P aux endroits où ladite surface rejoint chacune desdites surfaces frontales et, d'autre part, une portion de forme semi-circulaire raccordée auxdites portions droites.

De préférence, la partie de la cavité la plus éloignée de l'ouverture est située à une distance Lo de la paroi frontale de l'obstacle comprise entre 2,2b et 2,5b, où b désigne la dimension transversale ou largeur de l'ouverture.

Selon une autre caractéristique de l'invention, la distance L entre l'ouverture et la paroi frontale de l'obstacle est comprise entre 2,8 et 3,2b, où b désigne la dimension transversale ou largeur de l'ouverture.

Selon une caractéristique de l'invention, l'oscillateur fluidique comprend au moins deux capteurs de détection des variations de la vitesse ou de la pression de l'écoulement du fluide.

Avantageusement, les capteurs de détection des variations de la vitesse de l'écoulement du fluide sont disposés à proximité de l'extrémité de la buse.

D'autres caractéristiques et avantages de l'invention apparaîtront au cours de la description qui va suivre, donnée uniquement à titre d'exemple et faite en référence aux dessins annexés sur lesquels :
- la figure 1 est une vue de dessus d'un oscillateur fluidique de l'art antérieur,
- la figure 2 est une vue de dessus d'un oscillateur fluidique selon l'invention,
- la figure 3 est une vue de dessus de l'oscillateur fluidique de la figure 2 sur laquelle les tourbillons principaux T1, T2 ont été représentés pour une position extrême du jet de fluide,
- la figure 4 est un graphique montrant les courbes de linéarité de l'oscillateur fluidique représenté à la figure 2 avec et sans la buse 38.

Comme représenté à la figure 2 et désigné par la référence générale notée 20, un oscillateur fluidique est utilisé en relation avec un écoulement de gaz afin de déterminer le débit et le volume du gaz ayant traversé ledit oscillateur.

L'oscillateur fluidique 20 est symétrique par rapport à un plan de symétrie longitudinal P suivant lequel sont alignées une ouverture d'entrée 22 permettant à l'écoulement de pénétrer dans une chambre dite d'oscillation 24 au milieu de laquelle est positionné un obstacle 26 qui occupe la majeure partie de cette chambre et une ouverture de sortie 28 pour l'évacuation de l'écoulement de gaz hors de la chambre d'oscillation.

La chambre d'oscillation est délimitée par deux parois 30, 32 symétriques par rapport au plan P et qui raccordent entre elles les ouvertures d'entrée et de sortie.

L'ouverture d'entrée 22 est réalisée sous la forme d'une fente de dimension transversale, ou largeur, constante b et dont la plus grande dimension, sa hauteur, est contenue dans un plan perpendiculaire au plan de la figure 2.

Cette fente est prolongée suivant la direction longitudinale qui correspond à la direction d'alignement des ouvertures d'entrée 22 et de sortie 28 par deux parois latérales 34, 36 parallèles entre elles et qui forment une buse 38. Ces parois latérales s'étendent à l'intérieur de la chambre d'oscillation 24, respectivement à partir de chaque paroi 30, 32 de la chambre d'oscillation, de part et d'autre de l'ouverture d'entrée sur toute la hauteur de celle-ci.

Cette buse transforme l'écoulement de gaz qui la traverse et qui est repéré par la flèche F en un jet de fluide bidimensionnel (le jet de fluide reste à peu près le même suivant la direction parallèle à la hauteur de la fente) qui oscille transversalement par rapport au plan de symétrie longitudinal P.

La chambre d'oscillation 24 définit par ses parois 30 et 32 avec les parois de l'obstacle 26 deux canaux C1 et C2 qui permettent à l'écoulement de gaz de s'échapper alternativement par l'un ou l'autre canal vers la sortie 28 de l'oscillateur fluidique.

L'obstacle 26 possède une paroi frontale 40 dans laquelle est pratiquée une cavité 42 située en vis-à-vis de la buse 38 et qui est balayée par le jet de gaz au cours de son mouvement d'oscillation.

La paroi frontale 40 de l'obstacle 26 comprend également deux surfaces, appelées surfaces frontales 44 et 46, qui sont situées symétriquement de part et d'autre de la cavité 42 et qui sont essentiellement planes.

Le plan dans lequel sont disposées ces surfaces frontales est sensiblement perpendiculaire au plan de symétrie longitudinal P et à la direction de l'écoulement au droit de la fente 22.

La chambre d'oscillation 24 comprend également deux portions de parois 30a et 32a qui sont disposées symétriquement de part et d'autre de la fente 22 en vis-à-vis des surfaces frontales 44 et 46.

Les portions de parois 30a et 32a possèdent des surfaces qui sont parallèles aux surfaces frontales 44 et 46.

Ainsi, les tourbillons qui vont se former de part et d'autre du jet vont être positionnés dans les deux espaces libres situés entre les surfaces frontales 44 et 46 et les surfaces correspondantes respectives des portions de parois 30a et 32a. Ces tourbillons vont ainsi se développer de manière quasi libre entre ces surfaces.

Il n'est pas nécessaire que la dimension transversale, ou largeur, Fo des surfaces frontales 44, 46 soit grande pour que lesdites surfaces remplissent leur fonction et une largeur Fo comprise entre 0,8b et 1,4b et par exemple égale à 1,2b convient tout à fait.

La distance L entre les surfaces frontales 44 et 46 et les surfaces des portions de parois 30a et 32a ne doit pas être trop faible afin de laisser un espace libre suffisant au développement des tourbillons.

En effet, si la distance L est trop faible, par exemple inférieure à 2,8b, alors des problèmes peuvent survenir en régime laminaire car la pression des tourbillons augmente trop rapidement et ainsi le jet bascule trop vite

La distance L est par exemple égale à 3b.

La cavité 42 présente, dans le plan de la figure 2, une surface dont le profil permet de guider le jet de gaz dans ladite cavité au cours de son oscillation et d'empêcher toute création d'un phénomène de recirculation à l'intérieur de cette cavité.

Dans le plan de la figure 2, la surface de la cavité est délimitée par deux portions droites 42a, b qui sont sensiblement parallèles au plan de symétrie longitudinal P et qui rejoignent respectivement les deux surfaces frontales 44, 46 à l'ouverture de la cavité.

La surface de la cavité est également délimitée par une portion de forme semi-circulaire 42c qui est raccordée aux portions droites et qui forme ainsi le fond de la cavité. Ainsi les écoulements provenant du jet qui s'est séparé en rencontrant la surface de la cavité et qui sont guidés par ladite surface possèdent une direction sensiblement parallèle au plan P au sortir de ladite cavité.

Toutefois, d'autres formes conviennent également pourvu qu'elles remplissent les fonctions citées ci-dessus.

Par exemple, le profil de la surface pourrait être parabolique.

En outre, le fait que les surfaces des portions de parois 30a et 32a soient parallèles aux surfaces frontales 44, 46 et que l'écoulement sortant de la cavité 42 ait une direction sensiblement perpendiculaire à ces surfaces permet de ne pas communiquer à l'écoulement qui rencontre lesdites surfaces des portions de parois 30a et 32a un angle d'incidence trop éloigné de la normale à ces surfaces quel que soit le débit d'écoulement.

En effet, un angle d'incidence trop éloigné de la normale à ces surfaces aurait pour conséquence de modifier la taille du tourbillon positionné entre l'une de ces surfaces frontales et la surface en regard correspondante de la portion de paroi 30a et 32a.

Il convient également de noter que la cavité est plus profonde que celle de l'oscillateur fluidique de l'art antérieur représenté à la figure 1 afin de permettre de fixer la morphologie du tourbillon principal T1 quel que soit le régime d'écoulement (laminaire, transition, turbulent). Ainsi, même à très bas débit, c'est-à-dire pour des nombres de Reynolds d'environ 50, un tourbillon peut se développer similairement à celui du régime turbulent, dans cette cavité. Ceci permet donc de mesurer également une fréquence d'oscillation du jet pour des nombres de Reynolds d'environ 50 ce qui n' est pas possible avec la cavité de l'oscillateur de la figure 1.

La partie de la cavité qui est la plus éloignée de la fente 22 est située à une distance Lo des surfaces frontales 44, 46 qui sont dans le plan de l'ouverture de ladite cavité, Lo étant comprise entre 2,2b et 2,5b et par exemple égale à 2,4b.

En effet, la cavité 42 ne doit pas être trop profonde (par exemple Lo = 3b) afin de ne pas renforcer l'action du tourbillon T1 sur le jet à bas débits car ceci diminuerait considérablement la fréquence d'oscillation dudit jet.

La largeur Ro de la cavité 42 au droit de son ouverture entre les deux portions droites 42a, 42b est comprise entre 3,4b et 3,8b, et est par exemple égale à 3,6b.

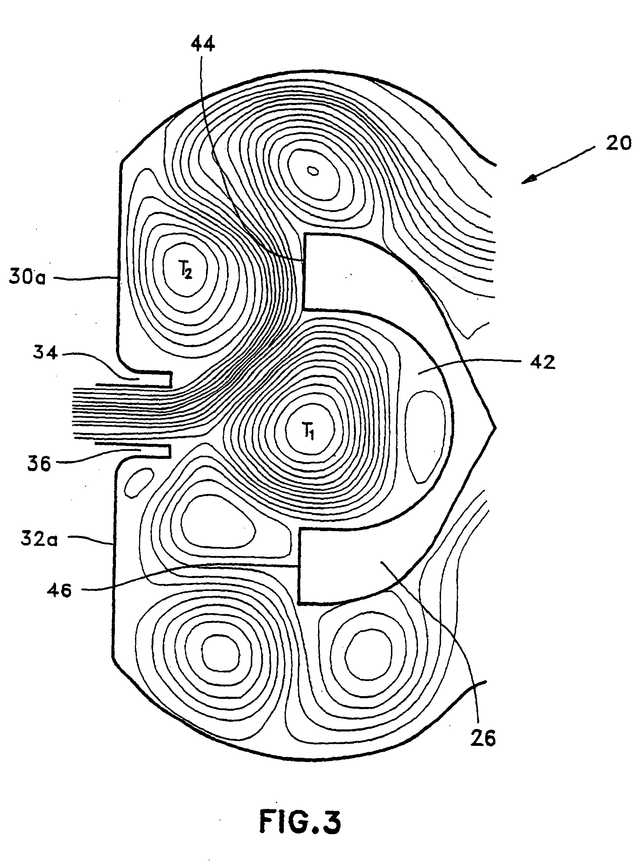

En allongeant la fente 22 grâce à la buse 38, lorsque le jet de fluide est plié dans une position telle que celle représentée à la figure 3, le jet est isolé de l'action perturbatrice des tourbillons situés entre la surface frontale 46 et la surface correspondante de la portion de paroi 32a dans sa partie canalisée par les parois 34, 36. Le jet se trouve ainsi rigidifié à sa base ce qui lui permet de résister à l'action perturbatrice de ces tourbillons parasites et donc d'avoir une fréquence d'oscillation plus élevée que celle de l'art antérieur (Fig.1) en régime de transition.

En outre, avec la configuration de l'oscillateur fluidique selon l'invention et représenté aux figures 2 et 3, le jet est davantage "plié" dans sa partie libre que dans l'art antérieur et l'on voit ainsi que le jet se replie en regard de la surface frontale 44 en direction de la surface correspondante de la portion de paroi 30a, ce qui laisse moins de place au tourbillon T2 pour se développer.

Ceci explique que le tourbillon T2 va être alimenté plus rapidement en pression que dans l'art antérieur, la pression exercée par T1 va donc être compensée plus rapidement ce qui va faire basculer le jet plus vite.

La dimension longitudinale Le des parois latérales 34, 36 doit être strictement inférieure à la distance L afin que lesdites parois ne soient pas trop proches de la cavité 42 qui va être totalement occupée par l'un des tourbillons T1 tandis que l'autre tourbillon T2 sera localisé dans l'espace libre situé entre la surface frontale 44 et la surface en regard de la portion de paroi 30a (Fig.3).

En effet, des parois latérales trop longues (par exemple Le = 2b) gêneraient le développement du tourbillon T1 et donc affecteraient l'oscillation du jet. Le développement du tourbillon T2 serait également modifié car le jet resterait alors à l'intérieur de la cavité, contraignant ainsi T2 à s'amplifier dans un espace restreint.

Avantageusement, la dimension Le est comprise entre 0,75b et 1b et est par exemple égale à 0,9b.

En outre, la présence de ces parois isole la base du jet de fluide des écoulements de retour qui peuvent provoquer des erreurs dans la détection de la fréquence d'oscillation du jet.

Comme représenté à la figure 2, les parois latérales 34, 36 de la buse 38 ont une épaisseur constante suivant leur dimension longitudinale Le, excepté au niveau du raccord entre lesdites parois latérales et les portions de parois 30a, 32a où la surface des parois latérales forme une légère concavité. Il est important que ces parois latérales prennent le moins de place possible afin de ne pas gêner le développement des tourbillons principaux T1 et T2.

Ainsi, les parois latérales 34, 36 peuvent prendre la forme de deux lames droites très minces qui suffiraient pour guider le jet de fluide et le protéger contre les perturbations.

La configuration de l'oscillateur fluidique précédemment décrit permet d'obtenir une morphologie des tourbillons T1 et T2 qui varie peu en fonction du régime d'écoulement ce qui assure une bonne métrologie.

L'oscillateur fluidique de la figure 2 permet la mesure du débit de gaz qui le traverse grâce à deux prises de pression situées aux points extrêmes de balayage du jet de gaz à l'intérieur de la cavité 42. Ces prises de pression sont reliées à des dispositifs connus qui permettent de mesurer la fréquence d'oscillation du jet. Un étalonnage préalable permet de relier la fréquence au débit.

Des capteurs thermiques ou ultrasonores peuvent également convenir pour détecter les variations de la vitesse de l'écoulement du jet et donc pour mesurer la fréquence d'oscillation du jet.

Ces capteurs peuvent aussi être placés entre la buse 38 et l'obstacle 26 dans la paroi supérieure (non représentée sur la figure 2) qui forme couvercle pour l'oscillateur fluidique, ou même dans la paroi inférieure dudit oscillateur fluidique (qui forme l'arrière plan sur la figure 2).

L'emplacement de tels capteurs 48, 50 est indiqué par des ronds sur la figure 2.

Il convient de noter que dans le plan de la figure 2 les capteurs 48, 50 sont placés avantageusement devant l'extrémité de la buse 38 et sont écartés d'une distance inférieure ou égale à l'écartement des parois latérales 34, 36 afin d'être disposés dans l'écoulement de fluide.

A bas débit, une couche limite se développe le long des surfaces internes des parois latérales 34, 36 ce qui confère au jet en sortie de la buse 38 un gradient de vitesse plus accentué que celui obtenu à la base du jet située au droit de l'ouverture 11 sur la figure 1 et donc le signal détecté par les capteurs est plus fort que dans l'art antérieur.

Ainsi, la détection de la fréquence d'oscillation du jet de fluide à bas débit au moyen des capteurs 48, 50 placés devant la buse 38 est rendue plus aisée que dans l'oscillateur fluidique de l'art antérieur.

En outre, aux débits élevés, les capteurs ainsi positionnés sont protégés des perturbations dues à des écoulements de retour qui risqueraient d'être détectées par lesdits capteurs.

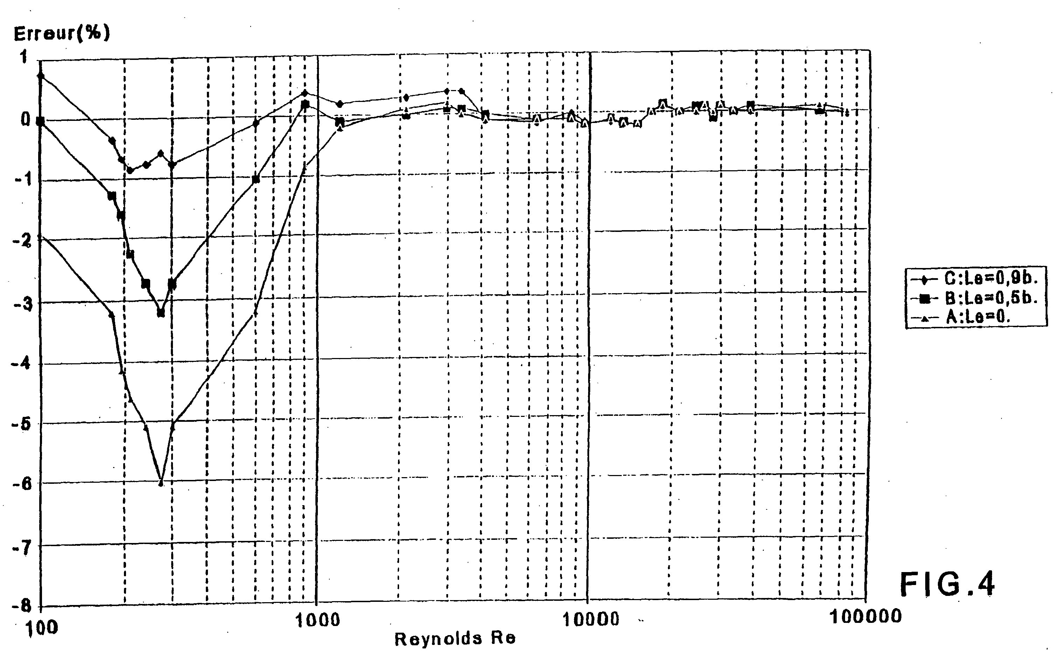

La figure 4 montre trois courbes de linéarité d'oscillateurs fluidiques ayant trois configurations distinctes : la courbe A correspond à celle de l'oscillateur de la figure 2 sans la buse 38, les courbes B et C sont celles de l'oscillateur de la figure 2 pour deux longueurs différentes de la buse 38, l'une de longueur 0,5b (courbe B) et l'autre de longueur 0,9b (courbe C).

Pour ces oscillateurs, la largeur b de la fente 22 est égale à 19mm et les autres dimensions sont celles qui ont été définies précédemment en fonction de cette largeur b.

Ainsi, la présence d'une buse à l'intérieur de la chambre d'oscillation a pour effet d'augmenter la fréquence d'oscillation du jet en régime de transition et donc de corriger la courbe de linéarité de l'oscillateur fluidique.

En allongeant légèrement la buse cet effet s'accroît également mais il convient toutefois de ne pas trop augmenter sa dimension longitudinale car alors la fréquence de basculement du jet risque d'augmenter considérablement en régime laminaire Un tel oscillateur fluidique peut aussi bien s'appliquer à des gaz qu'à des liquides (eau, carburants pour véhicules...).

## Revendications

1. Oscillateur fluidique symétrique par rapport à un plan de symétrie longitudinal (P), comprenant, une ouverture (22) permettant au fluide d'entrer dans une chambre (24) dite d'oscillation sous la forme d'un jet de fluide bidimensionnel oscillant transversalement par rapport audit plan de symétrie (P), un obstacle (26) occupant la majeure partie de ladite chambre d'oscillation et possédant une paroi frontale (40) pourvue d'une cavité (42) située en vis-à-vis de ladite ouverture et qui est balayée par le jet de fluide en oscillation, **caractérisé en ce que** deux parois latérales (34, 36) s'étendent de part et d'autre de l'ouverture (22) et la prolonge de manière à former une buse à l'intérieur de la chambre d'oscillation, en direction de l'obstacle, suivant une dimension longitudinale strictement inférieure à la distance entre l'ouverture et la paroi frontale de l'obstacle afin que l'extrémité desdites parois ne soient pas trop proche de la cavité (42).

2. Oscillateur fluidique selon la revendication 1, dans lequel les parois latérales (34, 36) sont sensiblement parallèles entre elles.

3. Oscillateur fluidique selon la revendication 1 ou 2, dans lequel la dimension longitudinale Le des parois latérales (34, 36) est comprise entre 0,75 et 1b, où b désigne la dimension transversale ou largeur de l'ouverture (22).

4. Oscillateur fluidique selon la revendication 3, dans lequel la dimension longitudinale Le des parois latérales est sensiblement égale à b.

5. Oscillateur fluidique selon l'une des revendications 1 à 4, dans lequel la paroi frontale (40) de l'obstacle (26) comporte deux surfaces frontales (44, 46) essentiellement planes encadrant la cavité (42) dudit obstacle, le plan de chacune desdites surfaces étant sensiblement perpendiculaire au plan de symétrie longitudinal (P).

6. Oscillateur fluidique selon la revendication 5, dans lequel la chambre d'oscillation (24) possède deux portions de parois (30a, 32a) situées de part et d'autre de l'ouverture (22) et comportant deux surfaces respectivement disposées en regard des surfaces frontales (44, 46) de l'obstacle et étant sensiblement parallèles à celles-ci.

7. Oscillateur fluidique selon la revendication 5, dans lequel la cavité (42) est définie par une surface qui possède, dans le plan d'oscillation du jet de fluide, d'une part, deux portions droites (42a, 42b) sensiblement parallèles au plan de symétrie longitudinal (P) aux endroits où ladite surface rejoint chacune desdites surfaces frontales (44, 46) et, d'autre part, une portion de forme semi-circulaire (42c) raccordée auxdites portions droites.

8. Oscillateur fluidique selon l'une des revendications 1 à 7, dans lequel la partie de la cavité (42) la plus éloignée de l'ouverture (22) est située à une distance Lo de la paroi frontale (40) de l'obstacle (26) comprise entre 2,2b et 2,5b, où b désigne la dimension transversale ou largeur de l'ouverture.

9. Oscillateur fluidique selon l'une des revendications 1 à 8, dans lequel la distance L entre l'ouverture (22) et la paroi frontale (40) de l'obstacle (26) est comprise entre 2,8 et 3,2b, où b désigne la dimension transversale ou largeur de l'ouverture.

10. Oscillateur fluidique selon l'une des revendications 1 à 9, comprenant au moins deux capteurs (48, 50) de détection des variations de la vitesse ou de la pression de l'écoulement du fluide.

11. Oscillateur fluidique selon la revendication 10, dans lequel des capteurs (48, 50) de détection des variations de la vitesse de l'écoulement du fluide sont disposés à proximité de l'extrémité de la buse (38).

## Claims

1. Fluid oscillator, symmetrical relative to a longitudinal plane of symmetry (P), comprising an opening (22) allowing a fluid to enter a so-called oscillation chamber (24) in the form of a two-dimensional fluid stream oscillating transversely relative to said plane of symmetry (P), an obstacle (26) occupying the major part of said oscillation chamber and having a frontal wall (40) provided with a cavity (42) positioned opposite said opening and which is swept by the oscillating fluid stream, **characterized in that** two side walls (34,36) extend either side of opening (22) and prolong the latter so as to form a nozzle inside the oscillation chamber, in the direction of the obstacle, by a longitudinal dimension that is strictly less than the distance between the opening and the frontal wall of the obstacle so that the ends of said walls are not too close to cavity (42).

2. Fluid oscillator as in claim 1, in which the side walls (34, 36) are substantially parallel to one another.

3. Fluid oscillator as in claim 1 or 2, in which the longitudinal dimension Le of side walls (34, 36) lies between 0.75 and 1b, in which b denotes the cross dimension or width of opening (22).

4. Fluid oscillator as in claim 3, in which the longitudinal dimension Le of the side walls is substantially equal to b.

5. Fluid oscillator as in any of claims 1 to 4, in which the frontal wall (40) of obstacle (26) comprises two, essentially planar frontal surfaces (44, 46) surrounding cavity (42) of said obstacle, the plane of each of said surfaces being substantially perpendicular to the longitudinal plane of symmetry (P).

6. Fluid oscillator as in claim 5, in which the oscillation chamber (24) has two wall portions (30a, 32a) positioned either side of opening (22) and comprise two surfaces respectively positioned opposite frontal surfaces (44, 46) of the obstacle and being substantially parallel thereto.

7. Fluid oscillator as in claim 5 in which cavity (42) is defined by a surface which, along the plane of oscillation of the fluid stream, comprises firstly two straight portions (42a, 42b) substantially parallel to the longitudinal plane of symmetry (P) at the points where said surface rejoins each of said frontal surfaces (44, 46), and secondly a portion of semicircular shape (42c) joined to said straight portions.

8. Fluid oscillator as in any of claims 1 to 7, in which that part of cavity (42) the furthest away from opening (22) is located at a distance Lo from the frontal wall (40) of obstacle (26) lying between 2.2b and 2.5b, where b denotes the cross dimension or width of the opening.

9. Fluid oscillator as in any of claims 1 to 8, in which the distance L between opening (22) and frontal wall (40) of obstacle (26) lies between 2.8 and 3.2b, where b denotes the cross dimension or width of the opening.

10. Fluid oscillator as in any of claims 1 to 9 comprising at least two sensors (48, 50) to detect variations in the speed or pressure of the fluid flow.

11. Fluid oscillator as in claim 10, in which the sensors (48, 50) for detecting variations in the speed of fluid flow are arranged in the vicinity of the end of nozzle (38).

## Patentansprüche

1. Fluidischer Osziallator, der zu einer Längssymmetrieebene (P) symmetrisch ist, aufweisend eine Öffnung (22), durch die ein Fluid in Form eines zweidimensionalen, in bezug auf die besagte Symmetrieebene (P) transversal schwingenden Fluidstrahls in eine so genannte Oszillationskammer (24) eintreten kann, und ein Hindernis (26), das den größten Teil der besagten Oszillationskammer belegt und das gegenüber der besagten Öffnung eine Stirnwand (40) mit einem Hohlraum (42) ausbildet, der von dem schwingenden Fluidstrahl bestrichen wird, **dadurch gekennzeichnet, dass** sich die beiden Seitenwände (34, 36) beiderseits der Öffnung (22) erstrecken und diese so verlängern, dass innerhalb der Oszillationskammer eine Düse ausgebildet wird, in Richtung des Hindernisses, wobei die Länge kürzer zu sein hat als der Abstand zwischen der Öffnung und der Stirnwand des Hindernisses, damit die Enden der besagten Wände nicht zu dicht am Hohlraum (42) sind.

2. Fluidischer Oszillator nach Anspruch 1, wobei die Seitenwände (34, 36) zueinander etwa parallel sind.

3. Fluidischer Oszillator nach Anspruch 1 oder 2, wobei das Längsmaß Le der Seitenwände (34, 36) 0,75 bis 1b ist, wobei b das Quermaß oder die Breite der Öffnung (22) ist.

4. Fluidischer Oszillator nach Anspruch 3, wobei das Längsmaß Le der Seitenwände etwa gleich b ist.

5. Fluidischer Oszillator nach einem der Ansprüche 1 bis 4, wobei die Stirnwand (40) des Hindernisses (26) zwei Stirnflächen (44, 46) umfasst, die im wesentlichen eben sind und den Hohlraum (42) des besagten Hindernisses umrahmen, wobei die Ebene jeder der besagten Flächen etwa senkrecht zur Längssymmetrieachse (P) verläuft.

6. Fluidischer Oszillator nach Anspruch 5, wobei die Oszillationskammer (24) zwei Wandabschnitte (30a, 32a) hat, die sich beiderseits der Öffnung (22) befinden und zwei Flächen aufweisen, die jeweils gegenüber den Stirnflächen (44, 46) des Hindernisses angeordnet und etwa parallel zu diesen sind.

7. Fluidischer Oszillator nach Anspruch 5, wobei der Hohlraum (42) von einer Fläche definiert wird, die in Schwingebene des Fluidstrahls einerseits zwei gerade Abschnitte (42a, 42b) aufweist, die an den Stellen, wo die besagte Fläche an die besagten Stirnflächen (44, 46) anschließt, etwa parallel zur Längssymmetrieebene (P) sind, und andererseits einen halbkreisförmigen Abschnitt (42c), der an die besagten geraden Abschnitte anschließt.

8. Fluidischer Oszillator nach einem der Ansprüche 1 bis 7, wobei der Teil des Hohlraums (42), der am weitesten von der Öffnung (22) entfernt ist, sich in einem Abstand Lo von der Stirnwand (40) des Hindernisses (26) befindet, der 2,2b bis 2,5b beträgt, wobei b das Quermaß oder die Breite der Öffnung bezeichnet.

9. Fluidischer Oszillator nach einem Ansprüche 1 bis 8, wobei der Abstand L zwischen der Öffnung (22) und der Stirnwand (40) des Hindernisses (26) 2,8 bis 3,2b beträgt, wobei b das Quermaß oder die Breite der Öffnung bezeichnet.

10. Fluidischer Oszillator nach einem der Ansprüche 1 bis 9, aufweisend mindestens zwei Sensoren (48, 50) zur Ermittlung der Geschwindigkeits- oder Druckschwankungen des Fluidstroms.

11. Fluidischer Oszillator nach Anspruch 10, wobei die Sensoren (48, 50) zur Ermittlung der Geschwindigkeitsschwankungen des Fluidstroms in der Nähe des Düsenendes (38) angeordnet sind.
